# EUROPÄISCHE PATENTSCHRIFT

(11) **EP 1 482 141 B1**
(45) Veröffentlichungstag und Bekanntmachung des Hinweises auf die Patenterteilung: **26.10.2005**
(21) Anmeldenummer: 04102034.8
(22) Anmeldetag: 11.05.2004
(51) Int. Cl.: F01N 3/28

(54) **Abgasanlage eines insbesondere Kraftfahrzeug-Verbrennungsmotors**
Exhaust system for a vehicle internal combustion engine
Système de gaz d'échappement pour véhicule automobile à moteur thermique

(30) Priorität: 28.05.2003 DE 10324618
(43) Veröffentlichungstag der Anmeldung: 01.12.2004
(73) Patentinhaber: J. Eberspächer GmbH & Co. KG, 73730 Esslingen (DE)
(72) Erfinder: Kern, Thomas, 70734, Fellbach (DE); Wirth, Georg, 73230, Kirchheim/Teck (DE)
(74) Vertreter: Patentanwalts-Partnerschaft Rotermund + Pfusch + Bernhard

(56) Entgegenhaltungen:
- EP-A- 0 757 163
- EP-A- 1 036 921
- US-A- 4 396 664
- US-A- 4 495 153
- US-A- 5 555 621

## Beschreibung

Die Erfindung betrifft eine Abgasanlage eines insbesondere Verbrennungsmotors nach dem Oberbegriff des Patentanspruchs 1.

Ein derartige Abgasanlage ist aus der US-A-4 495 153 bekannt und umfasst einen wabenförmig aufgebauten, axial durchströmbaren Katalysator-Monolith, der in einem Katalysatorgehäuse gelagert ist. Stromauf und/oder stromab dieses Monolithen führen jeweils mindestens zwei getrennte Abgaskanäle in das bzw. aus dem Katalysator-Gehäuse. Die Abgaskanäle sind über in den Stirnseiten des Katalysatorgehäuses angebrachte Stutzen bis vor die Stirnseite des Monolithen getrennt geführt, wobei benachbarte Stutzen gemeinsame Trennwandbereiche aufweisen. Des weiteren sind die gemeinsamen Trennwände jeweils elastisch gegenüber jeweils stirnseitig angrenzenden Bereichen des Monolithen gedichtet.

Bei dieser Bauweise lassen sich die getrennten Abgasströme innerhalb des Katalysator-Gehäuses nicht nur bis vor die Stirnwand des Monolithen getrennt führen bzw. stromab des Monolithen entsprechend getrennt abführen, sondern darüber hinaus durch elastisches Dichtmaterial eine Dichtung zwischen dem Monolithen und angrenzenden Abgaskanalwänden, die benachbarte Abgasströme trennen, so dichten, dass im Bereich der Stirnseiten des Monolithen kein Gasaustausch zwischen den getrennt zu- und abgeführten Abgaskanälen erfolgen kann. Innerhalb des Monolithen selbst bleiben die Abgasströme bei einem gattungsgemäß definierten Monolithen zwangsläufig getrennt, da die einzelnen Längskanäle des wabenförmig aufgebauten Monolithen keinen Gasqueraustausch zulassen.

Eine andere Abgasanlage ist aus DE 27 45 841 A1 bekannt, bei der jedoch jeweils an den Stirnseiten des Monolithen wegen einer dort fehlenden ausreichenden Dichtung ein Gasaustausch zwischen den an sich getrennten Abgasströmen erfolgt.

Mit Hilfe der Erfindung soll eine Möglichkeit geschaffen werden, auf möglichst rationelle Weise den Abgaszustand der getrennt in das Katalysatorgehäuse eingeführten und aus diesem auch wieder getrennt herausgeführten Abgasströme messen zu können bzw. eine Messeinrichtung einsetzen zu können, die möglichst einfach aufgebaut und damit kostengünstig einsetzbar ist. Außerdem soll das sekundäre Problem gelöst werden, nach dem die Messeinrichtungen zum Messen des stromauf- und stromabseitig bestehenden Abgasstromzustandes möglichst einfach und kostengünstig aufgebaut sein sollen.

Gelöst wird dieses Problem in erster Linie durch eine Ausgestaltung des Katalysators der gattungsgemäßen Abgasanlage nach den kennzeichnenden Merkmalen des Patentanspruchs 1.

Vorteilhafte und zweckmäßige Ausgestaltungen sind Gegenstand der Unteransprüche.

Der Monolith des Katalysators ist üblicherweise radial außen über eine elastische Zwischenlage innerhalb des Katalysator-Gehäuses gelagert. In einem solchen Fall ist die erfindungsgemäß vorgesehene elastische Dichtung zwischen Kanalwänden und Monolith selbstverständlich über den radial außenliegenden, ringspaltförmigen Lagermaterialbereich hinweg bis zu der Katalysator-Gehäusewand zu führen.

Als elastisches Dichtmaterial kann insbesondere hitzefestes Fasermaterial verwendet werden. Das Dichtmaterial kann übliche Formen einer Dichtung besitzen und insbesondere jeweils in einer nutförmigen Aufnahme der beiden Stirnwände des Katalysator-Gehäuses gelagert sein. Die Lagerung des Dichtmaterial in solchen Nuten ist derart vorzunehmen, dass die Dichtung unter elastischer Vorspannung an der zugewandten Stirnseite des Monolithen anliegen kann. Eine solche Vorspannung ist notwendig, da wegen der unterschiedlichen Materialien, aus denen der Monolith und das Katalysator-Gehäuse bestehen, aufgrund entsprechend unterschiedlicher Ausdehnungskoeffizienten eine axiale Spaltvergrößerung zwischen Monolith und Gehäuse-Stirnwänden bei betriebswarmem Katalysator gegenüber einem Katalysator bei Raumtemperatur vorliegt. Diese axiale Spaltvergrößerung ist insbesondere der Grund, weshalb ohne eine erfindungsgemäße, elastische Dichtung zwischen Kanaltrennwänden und angrenzendem Monolith keine für die Praxis ausreichende Abgasstromtrennung bei der gattungsgemäß bekannten Abgasanlage möglich ist.

Unter Umständen kann es ausreichend sein, die Abgasströme lediglich bis stromab des Monolithen getrennt zu führen. Dann kann die erfindungsgemäße Stirnwandausführung auf die Anströmseite des Monolithen beschränkt bleiben.

Ein vorteilhaftes Ausführungsbeispiel ist in der Zeichnung dargestellt.

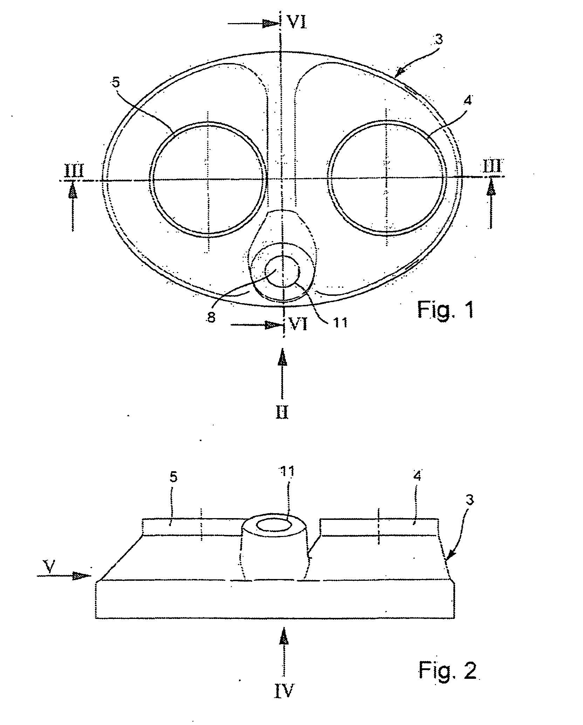

In dieser zeigen
- Fig. 1: eine Draufsicht auf eine Stirnseite eines durch zwei getrennte Abgaskanäle beaufschlagten Katalysators,
- Fig. 2: eine Ansicht auf die Stirnseite des Katalysatorgehäuses nach dem Pfeil II in Fig. 1,
- Fig. 3: einen Schnitt durch die Gehäusestirnwand nach Linie III-III in Fig. 1,
- Fig. 4: eine Ansicht auf die Gehäusestirnwand von unten nach dem Pfeil IV in Fig. 2,

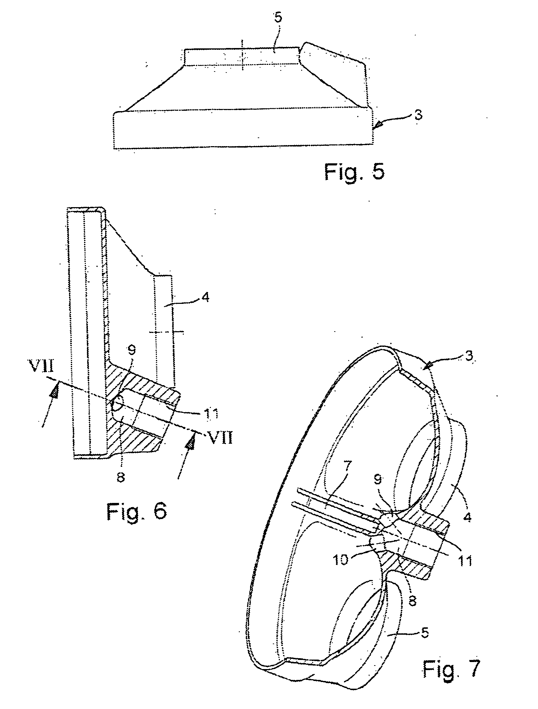

- Fig. 5: eine Ansicht auf die Stirnwand nach dem Pfeil V in Fig. 2,
- Fig. 6: einen Schnitt durch die Stirnwand nach Linie VI-VI in Fig. 1,
- Fig. 7: eine perspektivische Ansicht der Stirnwand nach den Fig. 1 bis 6 mit einem Ausschnitt entsprechend einem Schnitt nach Linie IV-IV in Fig. 6.

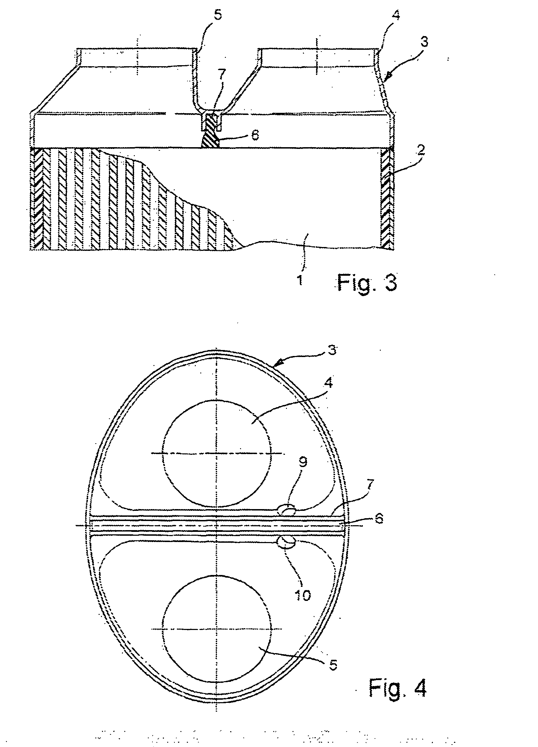

Von dem Gehäuse eines erfindungsgemäßen Katalysators ist lediglich der Bereich einer Stirnwand gezeichnet. Die gezeichnete Stirnwand kann sowohl diejenige stromauf oder stromab des Abgasstromes gelegene Stirnwand sein. Ein an diese Stirnwand angrenzender Monolith 1 des Katalysators ist axial abgebrochen in Fig. 3 angedeutet. Innerhalb des Katalysato-Gehäuses ist der Monolith 1 radial über eine bei Katalysatoren von Verbrennungsmotoren übliche elastische Lagerung 2 gelagert.

Der Monolith 1 ist wabenförmig ausgebildet und besitzt eine Vielzahl benachbarter katalytisch auf das durchgeführte Abgas wirkender Längskanäle.

Die Stirnwand 3 des Katalysator-Gehäuses besitzt zwei von außen in das Gehäuseinnere zu führende bzw. abführende Stutzen 4 und 5. Diese Stutzen 4 und 5 dienen dazu, getrennte Abgasströme getrennt auf den Monolithen 1 zu führen bzw. von diesem getrennt nach außen abzuführen.

Während in dem gezeichneten Ausführungsbeispiel lediglich zwei Stutzen 4 und 5 für zwei getrennt auf den Monolithen 1 und diesen hindurch zu führende Abgasströme vorgesehen sind, können je nach Anwendungsfall auch mehr als zwei Stutzen 4, 5 für mehr als zwei getrennt durch den Katalysator zu führende Abgasströme vorgesehen sein.

Unabhängig von der Anzahl der vorgesehenen Stutzen 4, 5 kommt es lediglich darauf an, dass die durch die einzelnen Stutzen 4, 5 getrennt geführten Abgasströme nicht nur innerhalb der Stutzen 4, 5 voneinander getrennt sind, sondern auch beim Übergang von den Stutzen 4, 5 auf den Monolithen bzw. von diesem abführend in stromab gelegene Stutzen 4, 5. Diese Trennung wird erreicht durch eine elastische Dichtung 6, die in einer nutförmigen Aufnahme 7 der Stirnwand 3 jeweils gelagert ist. Bei dem gezeichneten Beispiel ist die nutförmige Aufnahme 7 als eine gerade verlaufende Nut zwischen den Strömungsräumen der Stutzen 4 und 5 ausgebildet. Der Länge nach erstreckt sich diese Nut über die gesamte Innenbreite des Katalysator-Gehäuses, d.h. auch über die elastische Lagerung zwischen Monolithen 1 und Gehäusewand.

Die elastische Dichtung 6 besteht aus Fasermaterial, das zu einer in der nutförmigen Aufnahme 7 lagerbaren, streifenförmigen Dichtung geformt ist.

Um mit einem einzigen Messfühler die Abgaszustände der die Stutzen 4 und 5 getrennt durchströmenden Abgasströme erfassen zu können, ist in der Stirnwand 3 eine Kammer 8 mit in die Räume der beiden Stutzen 4 und 5 führenden Kanälen 9 und 10 vorgesehen. Die Kammer 9 liegt dabei oberhalb der elastischen Dichtung 6 bzw. der dieser aufnehmenden nutartigen Aufnahme, wodurch kurze Kanäle 9 und 10 in die Räume der Stutzen 4 und 5 möglich sind. In einer nach außen führenden Öffnung 11 der Kammer 8 ist ein Innengewinde vorgesehen, in das ein zur Messung von Abgaszuständen übliche Messsonde dicht eingesetzt werden kann. Die vorbeschriebene Kammer 8 zur Aufnahme jeweils einer Messsonde kann in beiden Stirnwänden des Katalysators vorgesehen sein.

Die erfindungsgemäßen Stirnwände 3 können besonders vorteilhaft als Feingussteile hergestellt werden.

## Patentansprüche

1. Abgasanlage eines insbesondere Kraftfahrzeug-Verbrennungsmotors, bei der
- ein wabenförmig aufgebauter, axial durchströmbarer Katalysator-Monolith (1) in einem Katalysator-Gehäuse gelagert ist,
- stromauf und/oder stromab des Monolithen (1) jeweils mindestes zwei getrennte Abgaskanäle in das bzw. aus dem Katalysator-Gehäuse führen,
- die Abgaskanäle über in den Stirnseiten des Katalysator-Gehäuses angebrachte Stutzen (4, 5) bis vor die Stirnseite des Monolithen (1) getrennt geführt sind, wobei benachbarte Stutzen gemeinsame Trennwandbereiche aufweisen,
- die gemeinsamen Trennwände jeweils elastisch gegenüber jeweils stirnseitig angrenzenden Bereichen des Monolithen (1) gedichtet sind,
**dadurch gekennzeichnet,**
- **dass** in wenigstens einer der Stirnwände (3) des Katalysator-Gehäuses mit den voneinander getrennten Stutzen (4, 5) eine mit den voneinander getrennten Stutzen (4, 5) verbundene Kammer (8) vorgesehen ist,
- **dass** die jeweilige Kammer (8) eine Öffnung (11) zum dichten Einsetzen eines Abgassensors besitzt.

2. Abgasanlage nach Anspruch 1,
**dadurch gekennzeichnet,**
**dass** zur elastischen Dichtung zwischen Monolith (1) und stirnseitig angrenzenden Trennwänden der Stutzen (4, 5) zu einer elastischen Dichtung (6) geformtes Fasermaterial eingesetzt ist.

3. Abgasanlage nach Anspruch 1 oder 2,
**dadurch gekennzeichnet,**
**dass** auf der jeweiligen Innenseite einer Stirnwand (3) des Katalysator-Gehäuses jeweils nutenförmige Aufnahmen (7) für das elastische Dichtmaterial (6) vorgesehen sind.

## Claims

1. An exhaust gas system for an internal combustion engine of a motor vehicle in particular, in which
- a monolithic catalytic converter (1) having a honeycomb structure through which the exhaust gas flows axially is mounted in a catalytic converter housing,
- upstream and/or downstream from the monolith (1), at least two separate exhaust gas channels lead into and out of the catalytic converter housing,
- the exhaust gas channels are guided separately through the connections (4, 5) mounted in the end faces of the catalytic converter housing up to in front of the end face of the monolith (1), whereby neighboring connections have common partition areas,
- the shared partitions are each sealed elastically with respect to areas of the monolith (1) adjacent thereto on the ends,
**characterized in that**
- a chamber (8) connected to the separate connections (4, 5) is provided in at least one of the end walls (3) of the catalytic converter housing with the separate connections (4, 5),
- the respective chamber (8) has an opening (11) for tightly inserting an exhaust gas sensor.

2. The exhaust gas system according to Claim 1,
**characterized in that**
a fiber material shaped into an elastic gasket (6) is used for the elastic sealing between the monolith (1) and the partitions of the connections (4, 5) adjacent on the ends.

3. The exhaust gas system according to Claim 1 or 2,
**characterized in that**
groove-shaped receptacles (7) for the elastic sealing material (6) are provided on the respective inside of an end wall (3) of the catalytic converter housing.

## Revendications

1. Circuit d'évacuation des gaz d'échappement d'en particulier un moteur à combustion interne de véhicule automobile, dans lequel
- un monolithe (1) de catalyseur structuré en nid d'abeilles et pouvant être balayé dans la direction axiale est monté dans un corps du pot catalytique,
- au moins deux conduits d'évacuation de gaz d'échappement séparés mènent chacun, en amont et/ou en aval du monolithe (1), dans le ou hors du corps du pot catalytique,
- les conduits d'évacuation des gaz d'échappement sont guidés séparément, par l'intermédiaire de tubulures (4, 5) montées dans les côtés frontaux du corps de pot catalytique, jusque devant le côté frontal du monolithe (1), des tubulures limitrophes présentant des zones de parois de séparation communes,
- les parois de séparation communes sont étanchéifiées chacune élastiquement par rapport aux zones limitrophes côté frontal du monolithe (1),
**caractérisé en ce que**
- un compartiment (8) relié aux tubulures (4, 5) séparées l'une de l'autre est prévu dans au moins l'une des parois frontales (3) du corps de pot catalytique avec les tubulures (4, 5) séparées l'une de l'autre,
- le compartiment respectif (8) présente une ouverture (11) pour la mise en place hermétique d'un détecteur de gaz d'échappement.

2. Circuit d'évacuation de gaz d'échappement suivant la revendication 1, **caractérisé en ce que** du matériau fibreux formé en un joint élastique (6) est mis en place pour l'étanchéité élastique entre le monolithe (1) et des parois de séparation, limitrophes côté frontal, des tubulures (4, 5).

3. Circuit d'évacuation de gaz d'échappement suivant l'une des revendications 1 et 2, **caractérisé en ce que** des logements (7) en forme de gorge pour le matériau d'étanchéité élastique (6) sont à chaque fois prévus sur le côté intérieur respectif d'une paroi frontale (3) du corps du pot catalytique.
